# EUROPEAN PATENT APPLICATION

(11) **EP 2 846 566 A1**
(43) Date of publication of application: **11.03.2015**
(21) Application number: 13796361.7
(22) Date of filing: 25.06.2013
(51) Int. Cl.: H04W 4/24

(54) **METHOD AND DEVICE FOR CHARGING LOCAL TRAFFIC ON WIRELESS SIDE**

(30) Priority: 15.08.2012 CN 201210289504
(71) Applicant: ZTE Corporation, Shenzhen, Guangdong 518057 (CN)
(72) Inventor: QIU, Kaifu, Shenzhen Guangdong 518057 (CN); ZHOU, Zhixiong, Shenzhen Guangdong 518057 (CN); CUI, Zhuo, Shenzhen Guangdong 518057 (CN); HUANG, Jun, Shenzhen Guangdong 518057 (CN); LI, Guiliang, Shenzhen Guangdong 518057 (CN); LAI, Hong, Shenzhen Guangdong 518057 (CN)
(74) Representative: Protector IP Consultants AS
(86) International application number: PCT/CN2013/077875
(87) International publication number: WO 2013/178114

(57) **Abstract**

The embodiments of the present invention disclose a method and apparatus for charging local traffic at a wireless side, which relate to the field of communications. The method includes: a wireless-side network element generating charging information containing data traffic and an IP address of a UE by collecting the data traffic and the IP address and transmitting the charging information to a Public Data Gateway (PGW); and the PGW searching for a corresponding UE according to the IP address in the charging information, and adding the data traffic to a Public Data Gateway Charging Data Record (PGW-CDR) corresponding to the found UE, so as to report it to a Charging Gateway (CG).

## Description

### Technical Field

The present invention relates to the field of communications, and in particular, to a method and apparatus for supporting charging of local divided traffic at a Radio Access Network (RAN) side.

### Background of the Related Art

With the development of communication technology and the growing popularity of smart phones, data traffic in a wireless communication system is in a trend of rapid growth. Rapid growth of data traffic causes a significant impact on the wireless backhaul and the core network. Therefore, a technology of directly dividing the data traffic at the RAN side emerges at the right moment, such as the Local IP Access (LIPA) technology. In addition, with the development of the technology, there may be a condition that a mobile phone directly interacts with a base station. In the above several cases, the data will not pass through the core network, and the core network will not sense the existence of this part of traffic, and cannot charge this traffic.

For a Long Term Evolution (LTE) system, a basic charging process thereof is that when a user accesses a network, a Service Gateway (SGW) and a Public Data Gateway (PGW) will charge this session respectively, to generate a Service Gateway Charging Data Record (SGW-CDR) and a Public Gateway Charging Data Record (PGW-CDR), and then report respective Charging Data Records (CRRs) to a Charging Gateway (CG), and the CG will combine two records of the same session. The two charging records are associated together via a charging ID and a PGW address. Both the SGW-CDR and the PGW-CDR carry the charging ID and the PGW address, and the CG will combine two records with the same charging ID and PGW address together. The charging ID is allocated by the PGW when a user initiates a session, and is transferred to the SGW.

Thus, in the existing charging system, how to support the charging at the RAN side is not considered. Therefore, how to effectively charge local traffic is an important subject.

### Summary of the Invention

The embodiments of the present invention provide a charging method and apparatus, used to better solve the problem of charging local data traffic at a RAN side.

According to an embodiment of the present invention, a method for charging local traffic at a wireless side is provided, comprising:
a wireless-side network element collecting data traffic and an IP address of a UE to generate charging information containing the data traffic and the IP address, and transmitting the charging information to a Public Data Gateway (PGW); and
the PGW searching for a corresponding UE according to the IP address in the charging information, and adding the data traffic to a Public Data Gateway Charging Data Record (PGW-CDR) corresponding to the found UE, so as to report it to a Charging Gateway (CG).

Preferably, when the UE accesses the network, the IP address is allocated to the UE by the PGW, or the IP address is allocated to the UE by a Dynamic Host Configuration Protocol (DHCP) server; and if the IP address is allocated by the DHCP server, the PGW establishes a correspondence between the IP address and the UE.

Preferably, before the wireless-side network element collects the data traffic and the IP address of the UE, the wireless-side network element establishes a charging channel for reporting the charging information with the PGW, so that the wireless-side network element transmits the charging information to the PGW through the charging channel.

Preferably, the wireless-side network element directly establishes the charging channel with the PGW according to an IP address of the PGW transmitted by a Mobility Management Entity (MME).

Preferably, the wireless-side network element establishes the charging channel with the PGW through an MME.

Preferably, the wireless-side network element establishes the charging channel with the PGW through a Service Gateway (SGW).

Preferably, when the PGW detects that the UE terminates a service connection or achieves a condition for generating partial calling bill, the PGW-CDR is reported to the CG.

Preferably, the charging method further comprises:
after receiving the GPW-CDR, the CG combining the PGW-CDR and a Service Gateway Charging Data Record (SGW-CDR), and reporting it to a charging center.

According to another embodiment of the present invention, an apparatus for charging local traffic at a wireless side is provided, comprising the following modules located at a wireless-side network element:
a charging information collection module, configured to collect data traffic of a UE and an IP address corresponding to the data traffic; and
a charging information generation module, configured to generate charging information containing the data traffic and the IP address, and transmit the charging information to a Public Data Gateway (PGW) via the charging channel, so that the PGW searches for a corresponding UE according to the IP address in the charging information, and add the data traffic to a Public Data Gateway Charging Data Record (PGW-CDR) corresponding to the found UE, so as to report it to a Charging Gateway (CG).

Preferably, the apparatus further comprises:
a charging channel establishment and maintenance module, configured to directly establish a charging channel between a wireless-side network element and the PGW according to an IP address of the PGW transmitted by a Mobility Management Entity (MME), or establish the charging channel between the wireless-side network element and the PGW through an MME/Service Gateway (SGW).

In the embodiments of the present invention, a charging channel is established between the RAN side and the PGW, and the data traffic collected by the RAN side is transmitted to the core network, so that the core network can perform effective charging according to the data traffic.

### Brief Description of Drawings

Fig. 1 is a functional block diagram of a charging method according to an embodiment of the present invention;
Fig. 2 is a diagram of a format of charging information according to an embodiment of the present invention;
Fig. 3 is a diagram of related functional modules of a wireless access network element according to an embodiment of the present invention; and
Fig. 4 is a flowchart of an operation of a charging system according to an embodiment of the present invention.

### Preferred Embodiments of the Present Invention

Preferable embodiments of the present invention will be further illustrated in detail hereinafter with respect to accompanying drawings. It should be understood that the preferable embodiment described below are merely used to illustrate and explain the present invention, instead of limiting the present invention. In the case of no conflict, the embodiments of this application and the features in the embodiments could be combined randomly with each other.

When a UE establishes a service connection with a network, in accordance with a standard, the session will be charged by a PGW and an SGW respectively, to generate a PGW-CDR and an SGW-CDR respectively. The embodiments of the present invention provide a charging method and apparatus, to charge the local data traffic at the RAN side. That is, if there is traffic at the RAN side and the traffic is terminated or locally divided, the RAN side also needs to support charging. The embodiments of the present invention will be described in detail below in conjunction with accompanying drawings 1-4.

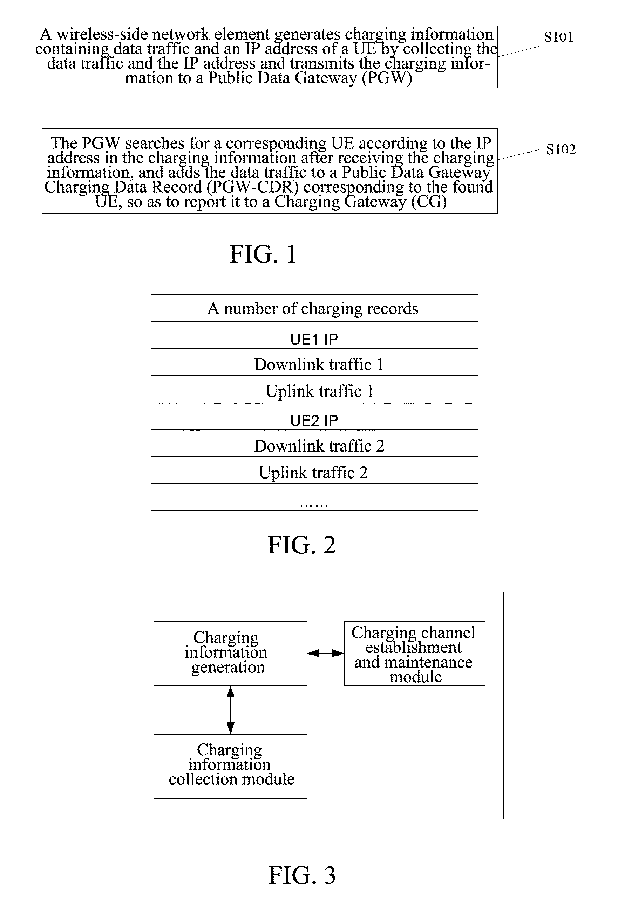

Fig. 1 is a functional block diagram of a charging method according to an embodiment of the present invention. As shown in Fig. 1, the method includes the following steps.

In step S101, after a UE at a user terminal initiates a service, a wireless-side network element collects data traffic and an IP address of a UE, generates charging information containing the data traffic and the IP address and transmits the charging information to a PGW through an established charging channel.

The data traffic of the UE includes uplink traffic and downlink traffic corresponding to the IP address thereof. The wireless-side network element periodically collects the uplink traffic and downlink traffic, and the IP address of the UE corresponding to the traffic, generates charging information and transfers the charging information to the PGW through the charging channel. Wherein, a format of the charging information is as shown in Fig. 2.

Wherein, before step S101 is performed, the wireless-side network element establishes a charging channel for reporting the charging information with the PGW. The wireless-side network element may establish a charging channel with the PGW in many manners, for example, the wireless-side network element directly establishes a charging channel with the PGW according to the IP address of the PGW transmitted by an MME, or establishes a charging channel with the PGW through the MME/SGW.

Wherein, when the UE accesses the network, an IP address is allocated to the UE by the PGW, or an IP address is allocated to the UE by a DHCP server. If the IP address is allocated by the DHCP server, the PGW will establish a correspondence between the IP address and the UE.

In step S103, after the PGW receives the charging information, the PGW searches for a corresponding UE according to the IP address in the charging information, and adds the data traffic to a Public Data Gateway Charging Data Record (PGW-CDR) corresponding to the found UE, so as to report it to a CG.

In other words, after the PGW receives the charging information, since the IP address of the UE is allocated by the PGW when it accesses the network, the PGW can match a corresponding UE according to the IP address, and merge the uplink traffic and the downlink traffic into the PGW-CDR. When the PGW detects that the UE terminates the current session, the PGW will report the PGW-CDR to the CG. After the CG receives the PGW-CDR, the CG will combine the PGW-CDR and the SGW-CDR, and report it to the charging center.

The wireless-side network element is a base station, which may be a micro station, a Pico, a Femto etc.

Fig. 3 is a diagram of related functional modules of a wireless access network element according to an embodiment of the present invention. As shown in Fig. 3, the related function modules include a charging channel establishment and maintenance module, a charging information collection module and a charging information generation module.

The charging channel establishment and maintenance module is configured to directly establish a charging channel between a wireless-side network element and the PGW according to an IP address of the PGW transmitted by a Mobility Management Entity (MME), or establish the charging channel between the wireless-side network element and the PGW through an MME/Service Gateway (SGW). For the charging channel establishment and maintenance module, its primary function is to establish a channel for reporting charging information between the PGW and the RAN side device. There are the following several optional technologies for the charging channel:
1. The charging channel may be a TCP channel directly established between the PGW and the RAN device. For this manner of establishing the charging channel, the MME needs to firstly notify the selected PGW to the RAN device, so that the RAN device directly establishes a TCP connection with the PGW.
2. The charging channel is established by the MME as a relay. I.e., the charging information is transferred to the MME by the RAN device, and then is transferred to the PGW by the MME. For such manner of establishing the charging channel, the charging information is transferred to the MME by the RAN device through an information channel between the RAN and the MME, and then is transferred by the MME to the PGW.
3. The charging channel is established by an SGW as a relay. I.e., the charging information is firstly transferred to the SGW by the RAN side device, and then is transferred to the PGW by the SGW. For such manner of establishing the charging channel, the charging information is transferred to the SGW by the RAN device through an information channel between the RAN and the SGW, and then is transferred by the SGW to the PGW.

The charging information collection module is configured to collect data traffic of a UE and an IP address corresponding to the data traffic. For the charging information collection module, its primary function is to periodically collect uplink traffic, downlink traffic, and a source IP address and a destination IP address corresponding to the traffic. For example, when a user is on sohu, in the uplink, i.e., the user ->sohu, the source IP address is an IP address of a mobile phone of the user, and the destination IP address is an IP address of a sohu server, and in the downlink, i.e., sohu-> the user, the source IP address is an IP address of the sohu server, and the destination IP address is the IP address of the mobile phone of the user.

The charging information generation module is configured to generate charging information containing the data traffic and the IP address, and transmit the charging information to a Public Data Gateway (PGW) through the charging channel. For the charging information generation module, its primary function is to generate charging information according to Fig. 2. It should be noted that the IP address therein is the IP address of the UE allocated by the PGW. Therefore, the PGW can know the correspondence between the UE and the IP address, and matches the UE according to the IP address in the charging record, and in turn merges the local divided traffic information in the PGW-CDR corresponding to the UE. If an NAT operation is made on the IP address corresponding to the data traffic collected by the charging information collection module, i.e., the IP address of the UE corresponding to the recorded data traffic is not the IP address allocated by the PGW, an inverse operation must be performed when the charging information is generated, and the IP address in the charging information is recoded as an IP address allocated by the PGW.

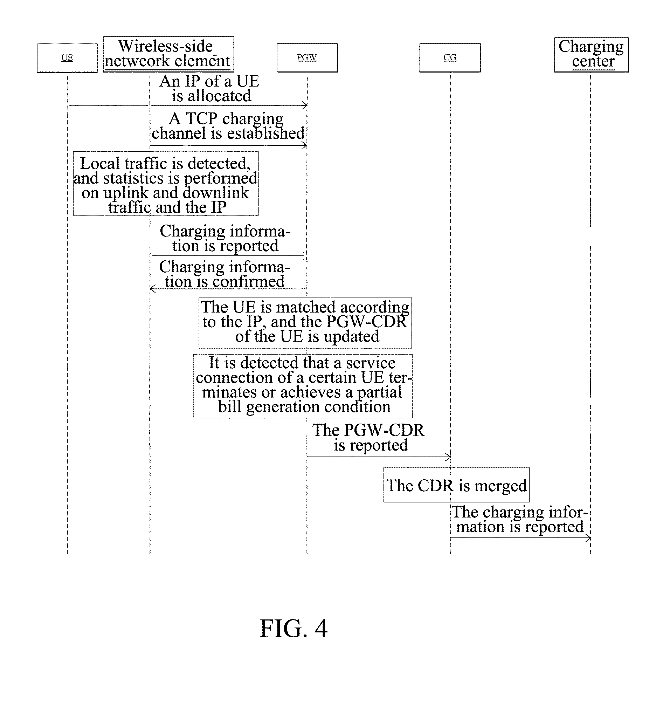

Fig. 4 is a flowchart of an operation of a charging system according to an embodiment of the present invention. As shown in Fig. 4, the system includes a UE, a wireless-side network element, a PGW, a CG, and a charging center, wherein,
the wireless-side network element is configured to establish a charging channel for reporting the charging information with the PGW, and after a UE at a user terminal initiates a service, collect data traffic and an IP address of the UE, generate charging information containing the data traffic and the IP address and transmit the charging information to the PGW through the established charging channel.
the PGW is configured to search for a corresponding UE according to the IP address in the charging information after receiving the charging information, and add the data traffic to a Public Data Gateway Charging Data Record (PGW-CDR) corresponding to the found UE, so as to report it to the CG.

The CG is used to combine the PGW-CDR and a Service Gateway Charging Data Record (SGW-CDR) after receiving the PGW-CDR, and report it to the charging center.

The process of the operation of the charging system is as follows:
1. When a UE accesses a network, an IP address is directly allocated to the UE by the PGW, or an IP address is allocated to the UE by another DHCP server, and a correspondence is established between the UE and the IP address.
2. A wireless-side network element establishes a charging channel with the PGW. The charging channel may be established in the following several manners:
   2a) an MME notifies a RAN device of an IP address of the PGW to which it accesses, and the RAN device directly establishes a TCP connection with the PGW.
   2b) the charging information is firstly transferred to the MME, and is transferred to a corresponding PGW by the MME, i.e., the charging channel is from the RAN to the MME and then to the PGW.
   2c) the charging information is firstly transferred to the SGW, and then is transferred to a corresponding PGW by the SGW, i.e., the charging channel is from the RAN to the SGW and then to the PGW.
3. When local traffic is generated, a charging information collection module collects data traffic which is locally processed and an IP address corresponding to the data traffic.
4. A charging information generation module regularly extracts data traffic information and IP address information, wherein the IP address needs to be an IP address allocated by the PGW, generates a charging information record according to the format in Fig. 2, and transmits the charging information to the PGW through the charging channel established in step 2.
5. After the charging information is received by the PGW, the PGW matches a UE according to the IP address, and updates the data traffic information to the PGW-CDR corresponding to the UE.
6. When the PGW detects that a service connection of a certain UE terminates or achieves a condition for generating partial calling bill, the PGW transfers the PGW-CDR to the CG. The condition for generating partial calling bill may be charging time expires, or the data traffic achieves a certain limitation etc.
7. After combining the obtained GPW-CDR and SGW-CDR, the CG report it to the charging center.

The charging of local traffic at the RAN side according to the embodiments of the present invention relates to processing of local charging information by a RAN device and core network network elements (CG, PGW). The above description is given based on an LTE system and the principle and technology thereof can also be applicable to other systems, such as GSM, UMTS, CDMA, TD-SCDMA etc.

The above description is only the preferred embodiments of the present invention and it is not intended to limit the present invention, the present invention can also have a variety of other embodiments. Without departing from the spirit and essence of the present invention, those skilled in the art can make various corresponding changes and variations based on the present invention, but all these changes and variations should belong to the protection scope of the appended claims in the present invention.

Obviously, those skilled in the art should understand that each module or each step of the aforementioned present invention can be implemented with general computing devices, and can be integrated in a single computing device, or distributed onto a network consisting of a plurality of computing devices; alternatively, they can be implemented with program codes executable by the computing devices, and therefore, they can be stored in storage devices to be executed by the computing devices, and in some cases, the steps illustrated or described may be performed in an order different from that described here; alternatively, they are respectively made into a plurality of integrated circuit modules; alternatively, it is implemented with making several modules or steps of them into a single integrated circuit module. Thus, the present invention is not limited to any specific combinations of hardware and software.

### Industrial Applicability

The embodiments of the present invention enable the core network to perform effective charging according to the data traffic.

## Claims

1. A method for charging local traffic at a wireless side, comprising:
a wireless-side network element collecting data traffic and an IP address of a UE to generate charging information containing the data traffic and the IP address, and transmitting the charging information to a Public Data Gateway (PGW); and
the PGW searching for a corresponding UE according to the IP address in the charging information, and adding the data traffic to a Public Data Gateway Charging Data Record (PGW-CDR) corresponding to the found UE to report to a Charging Gateway (CG).

2. The method according to claim 1, wherein, when the UE accesses a network, the IP address is allocated to the UE by the PGW, or the IP address is allocated to the UE by a Dynamic Host Configuration Protocol (DHCP) server; and if the IP address is allocated by the DHCP server, the PGW establishes a correspondence between the IP address and the UE.

3. The method according to claim 2, further comprising: before the wireless-side network element collects the data traffic and the IP address of the UE, the wireless-side network element establishing a charging channel for reporting the charging information with the PGW, so that the wireless-side network element transmits the charging information to the PGW through the charging channel.

4. The method according to claim 3, wherein, the step of the wireless-side network element establishing the charging channel for reporting the charging information with the PGW comprises: the wireless-side network element directly establishing the charging channel with the PGW according to an IP address of the PGW transmitted by a Mobility Management Entity (MME).

5. The method according to claim 3, wherein, the step of the wireless-side network element establishing the charging channel for reporting the charging information with the PGW comprises: the wireless-side network element establishing the charging channel with the PGW through an MME.

6. The method according to claim 3, wherein, the step of the wireless-side network element establishing the charging channel for reporting the charging information with the PGW comprises: the wireless-side network element establishing the charging channel with the PGW through a Service Gateway (SGW).

7. The method according to any of claims 4-6, further comprising: when the PGW detects that the UE terminates a service connection or achieves a condition for generating partial calling bill, reporting the PGW-CDR to the CG.

8. The method according to claim 7, further comprising:
after receiving the GPW-CDR, the CG combining the PGW-CDR and a Service Gateway Charging Data Record (SGW-CDR) and reporting to a charging center.

9. An apparatus for charging local traffic at a wireless side, comprising:
a charging information collection module, configured to collect data traffic of a UE and an IP address corresponding to the data traffic; and
a charging information generation module, configured to generate charging information containing the data traffic and the IP address, and transmit the charging information to a Public Data Gateway (PGW), so that the PGW searches for a corresponding UE according to the IP address in the charging information, and add the data traffic to a Public Data Gateway Charging Data Record (PGW-CDR) corresponding to the found UE to report to a Charging Gateway (CG).

10. The apparatus according to claim 9, further comprising:
a charging channel establishment and maintenance module, configured to directly establish a charging channel between a wireless-side network element and the PGW according to an IP address of the PGW transmitted by a Mobility Management Entity (MME), or establish the charging channel between the wireless-side network element and the PGW through the MME/Service Gateway (SGW).

11. The apparatus according to claim 9 or 10, wherein, the charging information generation module is configured to report the PGW-CDR to the CG when detecting that the UE terminates a service connection or achieves a condition for generating partial calling bill.
